(19) Europäisches Patentamt / European Patent Office / Office européen des brevets

(11) **EP 1 785 744 A1**

(12) **EUROPEAN PATENT APPLICATION**

(43) Date of publication:
**16.05.2007 Bulletin 2007/20**

(51) Int Cl.:
*G01S 17/93* (2006.01)   *G08G 1/16* (2006.01)

(21) Application number: **06023461.4**

(22) Date of filing: **10.11.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **10.11.2005 JP 2005325546**<br><br>(71) Applicant: **HITACHI, LTD.**<br>**Chiyoda-ku**<br>**Tokyo 100-8280 (JP)** | (72) Inventors:<br>• **Suzuki, Hideya,**<br>  **c/o Hitachi, Ltd.**<br>  **I.P. Group**<br>  **Chiyoda-ku**<br>  **Tokyo 100-8220 (JP)**<br>• **Hanawa, Kazuhiko,**<br>  **c/o Hitachi, Ltd.**<br>  **I.P. Group**<br>  **Chiyoda-ku**<br>  **Tokyo 100-8220 (JP)**<br><br>(74) Representative: **Beetz & Partner**<br>**Steinsdorfstrasse 10**<br>**80538 München (DE)** |

(54) **In-vehicle radar device and communication device**

(57) In order to consider an optimum control method and an optimum mounting method needed, a Ultra Wide Band (UWB) device having a communication function and a radar function are used. For an obstacle vehicle in front, the distance between two cars is measured using the radar function, and according to this distance, a hazard warning is issued to a driver or a pre-crash operation is carried out. Moreover, by informing its own position to each other between vehicles using the communication function, the distance to a vehicle near to the own vehicle (100) is measured regardless of clutter, and according to this distance, a hazard warning is issued to a driver or a pre-crash operation is carried out. Moreover, the operating frequency and transmission power of a radar are changed based on its own location information, thereby reducing influence to and from other wireless system.

# FIG.1A

# FIG.1B

**Description**

BACKGROUND OF THE INVENTION

The present invention relates to a wireless device having a radar function mounted in a high speed vehicle, and also relates to a radar system having a communication function between the wireless devices.

In order to improve safety in vehicles, millimeter wave radars have been put in practical use since around 1999. This millimeter wave radar allows accurate measurement of the distance between two cars even under adverse weather conditions as compared with the conventional infrared radar. The millimeter wave radar is mounted to the front of a vehicle, and from the information obtained from the radar, the distance and relative speed between a leading car and its own car are detected. Then, operations such as controlling to make the distance between two cars constant and the like are carried out according to the detected distance between two cars and relative speed.

However, the application of millimeter wave radars remains to some of luxury cars because its price is high as compared with the infrared radar. Moreover, although the millimeter wave radar is mounted to the front of a vehicle to detect a leading vehicle, it is difficult to capture vehicles existing in a lateral direction and therebehind due to the directivity of the electric wave.

UWB (Ultra Wide Band), which is currently under development for the purpose of the next generation wireless broadband communication, has been under standardization since 2002. It is also known that in the case where a transceiver for generating a waveform of electric wave of this UWB is designed, a pulse wave which the own vehicle transmitted reflects off an object and the round-trip time between the receiving wave and the transmitted pulse is measured, thereby allowing the transceiver to have a radar function to measure the distance between the transceiver and the object. Then, in European industry consortium, SARA (Short-range Automotive Radar frequency Allocation), a short range radar using UWB using the frequency of a 24 GHz band is currently studied, and a study of the in-vehicle UWB radar is also ongoing. Moreover, a car platoon carrying out vehicle-to-vehicle communication while putting data on the transmitting and receiving waves of the UWB radar is also under study by the above SARA.

In using a wide frequency band such as the UWB, it is necessary to limit the frequency according to the situation in order to mitigate the influence due to the electric wave interference with existing wireless systems. For this reason, there is also a move in which multi-frequency dividing (multi-band) is carried out to limit the usage for each frequency band according to the type of radio equipment.

The related art documents include "What is UWB (Ultra Wide Band)?" June 28, 2005, available from http://www.kuroda.elec.keio.ac.jp/projects/TeamUWB/chap terl.html, and Hajime Seki "Introduction of the Studies on Inter-Vehicle Communication in Overseas: Their History and Present Situation", Automobile Research Vol. 27, No. 1 (January, 2005), p21-p26, Japan Automobile Research Institute, Inc.

SUMMARY OF THE INVENTION

In the radar system by means of Ultra Wide Band Communication, it is possible to measure the distance to a surrounding object or to carry out radio communications, directly as a radar system. However, a study has not been carried out yet on combining the measurement of distance to other vehicle around the own vehicle within a short distance and the vehicle-to-vehicle communication, and it is thus necessary to combine the radar function and the vehicle-to-vehicle communication to carry out the transmission and reception robust against clutter, such as unnecessary reflection from around the vehicles.

According to the present invention, a Ultra Wide Band Communication having a communication function and radar function is used to measure the distance to an obstacle ahead or a front vehicle by means of the radar function. Moreover, with the use of the communication function, by informing its own position to each other between vehicles equipped with the communication function by means of the UWB, the distance to a surrounding vehicle close to its own vehicle is measured, and according to this distance a hazard warning is issued to the driver or a pre-crash safety operation is carried out.

Moreover, according to the present invention, it is possible to obtain the direction and distance from location information overlapped with the radar wave from other vehicles, and to identify, regardless of clutter, the position even from the radar waves other than the reflection wave of a radar wave which the own vehicle transmitted.

Other objects, features and advantages of the invention will become apparent from the following description of the embodiments of the invention taken in conjunction with the accompanying drawings.

BRIEF DESCRIPTION OF THE DRAWINGS

Figs. 1A and 1B are views showing a configuration example of an in-vehicle radar device using the present invention.

Fig. 2 is a view showing another configuration example of the in-vehicle radar device using the present invention.

Fig. 3 is a view showing another configuration example of the in-vehicle radar device using the present invention.

Fig. 4 is a view showing an example of a radar waveform in an embodiment using the present invention.

Figs. 5A and 5B are views showing an example of the transmitting cycle of a radar wave in the embodiment using the present invention.

Fig. 6 is a view showing an example of the format of radar wave in the embodiment using the present invention.

Fig. 7 is a view showing the process of a control part in the in-vehicle radar device using the present invention.

Fig. 8 is a view showing the configuration of a vehicle driving control system.

Fig. 9 is a view showing the switching of the operating frequencies and power of a radar.

Figs. 10A and 10B are views showing a database of frequency limiting regions.

Fig. 11 is a view showing a process flow of the switching of operation frequency bands.

Fig. 12 is a view showing the operation frequency band of a region C outside frequency limiting regions.

Fig. 13 is a view showing the operating frequency band of a frequency limiting region A.

Fig. 14 is a view showing the operating frequency band of a frequency limiting region B.

Fig. 15 is a view showing a data transfer in each frequency channel.

Fig. 16 is a view showing priorities of a vehicle-to-vehicle communication data.

Fig. 17 is a view showing a vehicle entering and leaving a car platoon in the present invention.

## DETAILED DESCRIPTION OF THE INVENTION

In the following, the present invention will be described by taking an in-vehicle radar device having a vehicle-to-vehicle communication function, as an example.

Embodiment 1

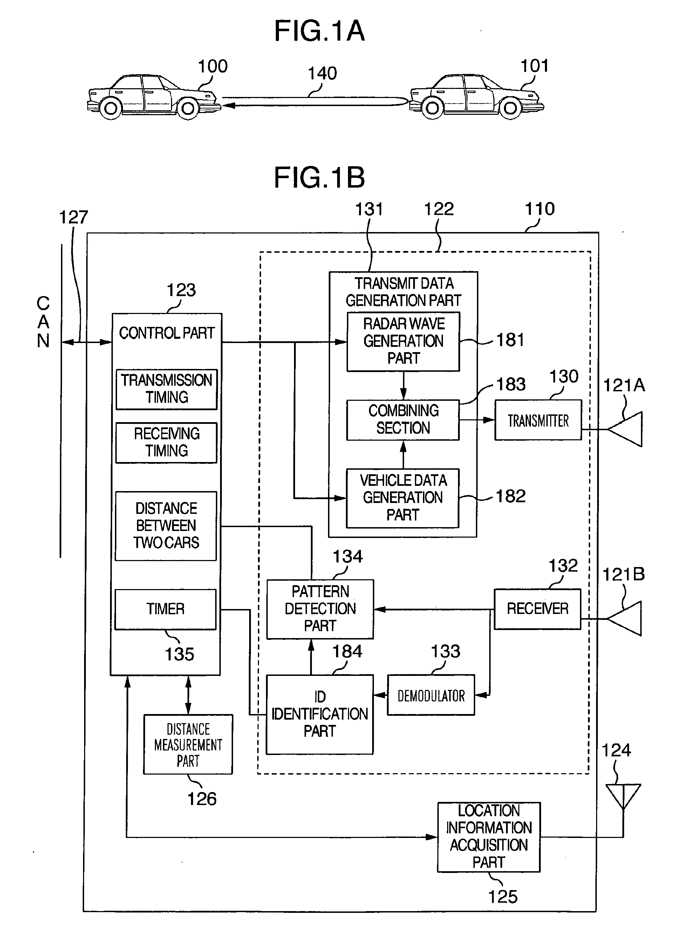

An example of the configuration of an in-vehicle radar device using the present invention is described with reference to Fig. 1A and Fig. 1B. In Fig. 1A, an in-vehicle radar device 110 using the present invention shown in Fig. 1B is mounted on an own vehicle 100. A location information acquisition part 125 mounted in the in-vehicle radar device 110 receives signal from a GPS satellite via an antenna 124, and measures its own position to transmit this to a vehicle-to-vehicle distance measurement part 126. In addition, although this location information acquisition part indicates a GPS by way of example, other location information acquisition method may be employed.

In the in-vehicle radar device 110, a control part 123 sends to a radar transceiver 122 a command to transmit a radar wave in a predetermined cycle or at a timing determined according to the driving speed. In the control part 123, a timing at which this command to transmit was made is read from a timer 135 and stored as the transmit timing. In the radar transceiver 122, a pulse of radar wave is generated by a transmission data generation part 131 according to a command from the control part 123, and a transmit data including the obtained own location information and the own vehicle ID are prepared, and a radar wave 140 made by adding the transmit data to the pulse of radar wave is transmitted by a transmitter 130 via an antenna 121A.

A radar wave is received by a radar transceiver 122 via a receiving antenna 121B. As to the mounting position of the receiving antenna 121B of the in-vehicle radar device, the receiving antenna 121B is mounted on a position, such as on the upper part of the roof or on the dashboard of this vehicle, where the communication in the front and back direction of the vehicle is carried out easily. The received radar wave is converted and amplified to a lower frequency in a receiver 132 to generate a received signal. The received signal is demodulated in a demodulator 133, and the own vehicle ID is compared with an ID of the received signal in an ID identification part to thereby identify whether the received signal is the reflection wave of a radar wave which the own vehicle transmitted or a radar wave which other vehicle transmitted. If it is the received signal of a radar wave which the own car transmitted, a cross-correlation with a known waveform pattern of a certain length is taken in a pattern detection part 134 and then the control part 123 is triggered at a timing, in which a high correlation has been obtained, in order to remove the influence of multipath. The control part 123 obtains the trigger timing from the timer 135 and stores this as the reception timing. The transmission timing and reception timing are sent to the vehicle-to-vehicle distance measurement part 126. The vehicle-to-vehicle distance measurement part 126 calculates the distance A between the own vehicle 100 and the vehicle 101 from the time difference between the transmission timing and the reception timing of the radar wave, which time difference has been sent from the control part 123.

Moreover, if it is the received signal of a radar wave transmitted from an in-vehicle radar device mounted in other vehicle, the received signal which has been demodulated in the demodulator 133 is received, and the vehicle ID and the location information of other vehicle are extracted from this received signal and transmitted to the vehicle-to-vehicle distance measurement part 126. The vehicle-to-vehicle distance measurement part 126 calculates the distance B between two cars from the transmitted location information of other vehicle and its own location information obtained from the location information acquisition part 125. In addition, as many distances B between two cars as the number of a plurality of signals received in the receiver 132 of the radar will be obtained because a plurality of other vehicles are assumed to exist around the own vehicle.

The control part 123 selects the shortest distance C between two cars among the distance A between two cars and a plurality of distances B between two cars obtained in the vehicle-to-vehicle distance measurement part 126. This distance C between two cars is transmitted to an external device via a network 127. Moreover, if the location of a vehicle having the shortest distance between two cars is the one calculated from the vehicle information obtained from a radar wave which this vehicle transmitted, the current position of the corresponding vehicle together with the distance between two cars are transmitted to the external device and thereby this external device can also know in which direction the vehicle is accessing. Alternatively, if the distance C between two cars is a specified value or less, it is determined that there is a danger of vehicle-to-vehicle contact, and a signal indicating the danger is transmitted to the external device via the network 127. The example of this external device includes a warning device having the warning function and a safety device having a pre-crash safety function.

In an example in which a warning device is connected as the external device, the calculated shortest distance C between two cars is transmitted to the warning function via the control part 123. In the warning function, if the obtained distance C between two cars is a predetermined distance or less, a warning indicating that an adjacent vehicle is accessing the driver is issued by means of voice, sound, display or the like.

Moreover, in an example in which a safety device is connected as the external device, the calculated distance C between two cars is transmitted to a pre-crash safety function via the control part 123. The pre-crash safety function activates a driver protection function of the own vehicle corresponding to the distance C between two cars. The driver protection function includes the functions of securing the driver by rolling up a seat belt prior to crash, realizing quick service by pressurizing the brake fluid pressure, activating an airbag or the like, for example.

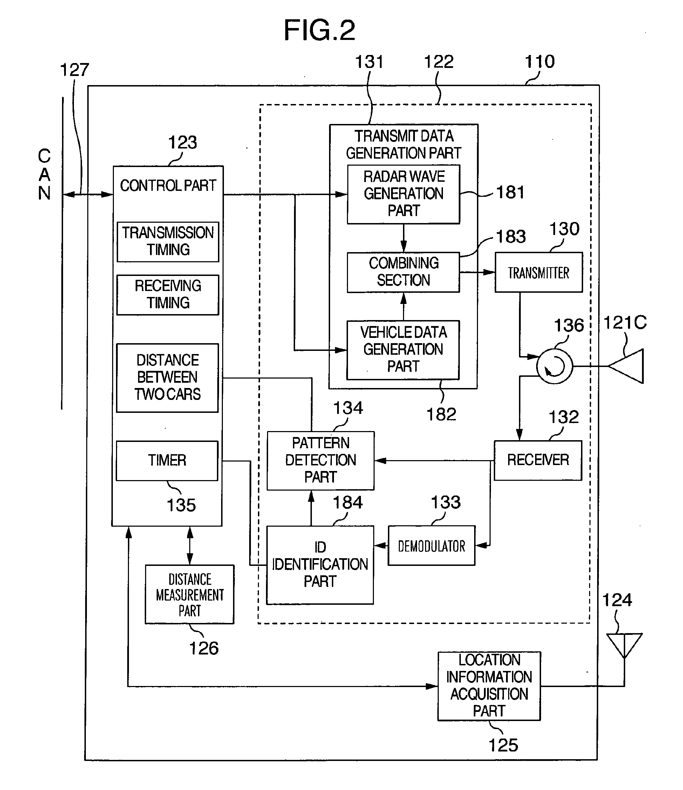

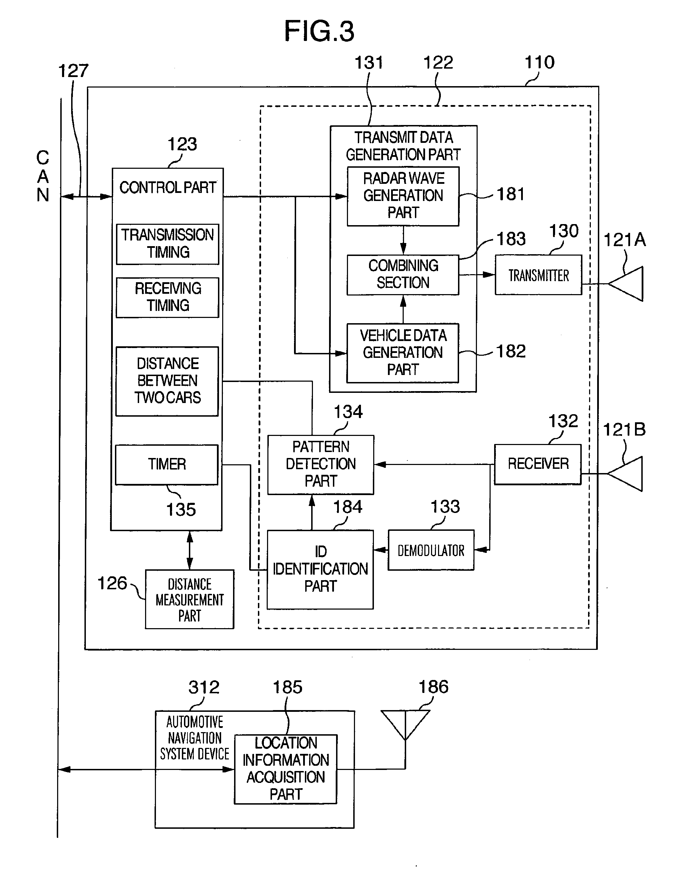

Next, other configuration examples of the in-vehicle radar device are shown in Fig. 2 and Fig. 3. In the in-vehicle radar device of Fig. 2, unlike in Fig. 1B, an example is shown in which an antenna 121C is shared by the transmitter 130 and the receiver 132. Although the antenna 121C is usually connected to the receiver 132 through a selector 136, the selector 136 connects the antenna 121C to the transmitter 130 only when the transmitter 130 carries out the transmission operation. In this case, the selector 136 is configured to switch the connection destination of the antenna 121C in response to a command from the transmitter part 130. In the case where a circulator is used as the selector 136, upon receipt of an electric wave at the antenna 121C the received receiving wave is sent to the receiver 132, and when the transmitter 130 transmitted a signal by the transmission operation, this signal is sent to the antenna 121C, and thus the transmission wave and the receiving wave are directed to the antenna 121C and to the receiver 132, respectively.

Moreover, Fig. 3 shows the case where a location information acquisition part 185 is external to the in-vehicle radar device 110, unlike in Fig. 1B. Here, the signal from a GPS satellite is received via an antenna 186, and its own position is measured by the location information acquisition part 185 in an automotive navigation system 312, and the obtained location information is taken in the control part 123 via a network such as CAN (Controller Area Network).

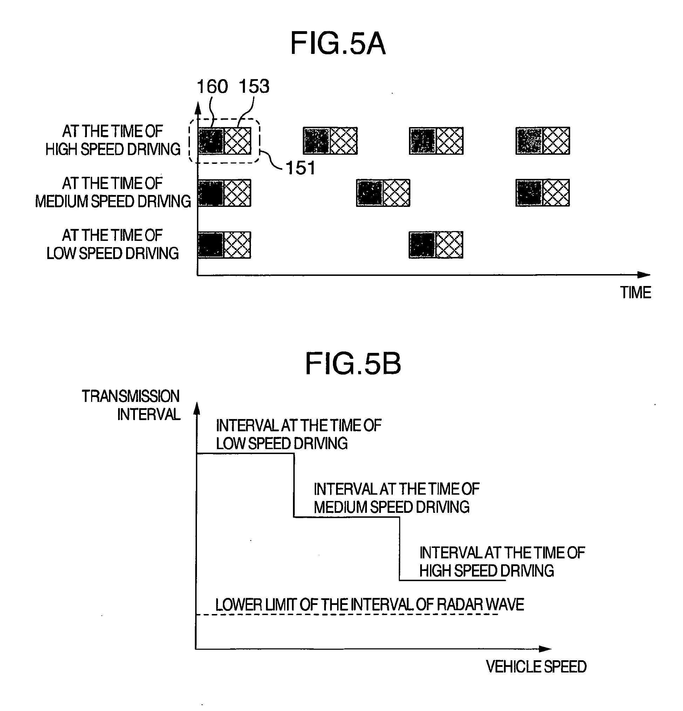

Next, the transmission timing of the radar wave transmitted from the in-vehicle radar device 110 is described using Fig. 5A and Fig. 5B. In the graph described in Fig. 5A, the horizontal axis represents time, and the vertical axis represents the driving speed. From the above, there are described three examples of at the time of high speed driving, at the time of medium speed driving, and at the time of low speed driving. This graph describes the transmission time of a radar wave 151, and because the moving speed of a vehicle is fast at the time of high speed driving, the transmission interval of the radar wave is set short so that the distance between two cars is measured frequently by transmitting the radar wave in a short cycle. In contrast, at the time of low speed driving, the moving speed of a vehicle is slow, and the radar wave is therefore transmitted in a long cycle and the frequency of the measurement of the distance between two cars is reduced, thereby achieving reduction in power. In addition, the vehicle speed can be known in the control part 123 by the methods of referring to the vehicle speed pulse via the network 127 or referring to the moving distance per a unit of time in its own location information periodically obtained from the location information acquisition part 125. Moreover, although in this embodiment there are three modes of high speed/medium speed/low speed, two modes of high speed/low speed may be used, or four modes or more may be used. Moreover, to stop transmitting the radar wave for the purpose of reduction in power when not driving is also within the scope of the present invention.

The control part 123 receives vehicle speed information from the control device of the vehicle via the network, determines the transmission interval of the radar wave based on a relationship as shown in the graph of Fig. 5B according to each vehicle speed, and indicates the transmission timing to the transmission data generation part 131. In accordance with the transmission timing to indicate at this time, the radar wave is transmitted in a predetermined interval set for the time of low speed driving until the vehicle reaches a constant speed, and thereafter the transmission interval is reduced as the vehicle speed is getting faster. However, even when the vehicle speed becomes beyond a predetermined value, the lower limit of the interval of the radar wave 151 is set, for example, to an interval on the order of 10 mS, as the resolution required for control using the information on the distance between two cars obtained as a result of receiving the reflection wave. Moreover, accordingly, in order to secure the data transmission time via the network 127 for the purpose of the vehicle-to-vehicle communication, the transmission timing of the radar wave is controlled as not to be shorter beyond a certain interval.

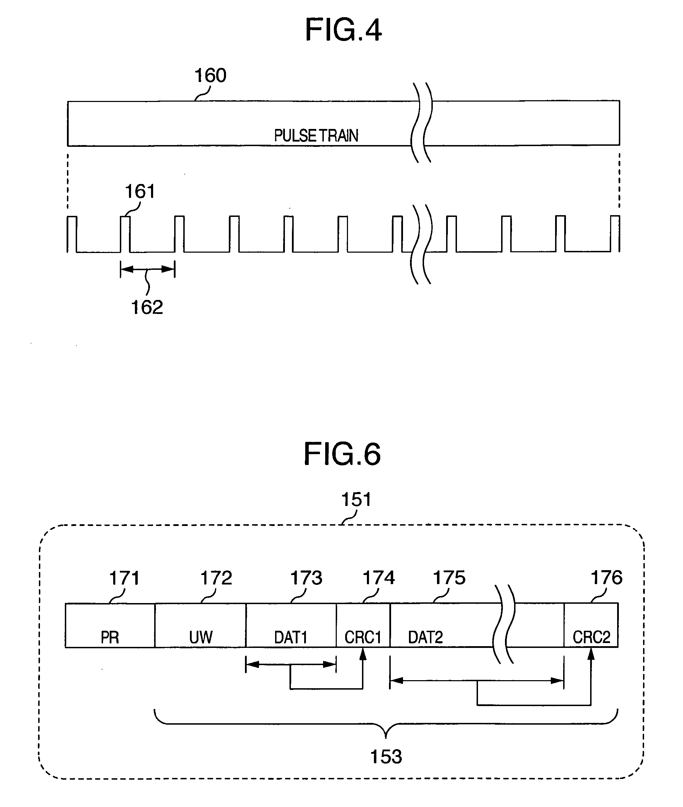

Fig. 4 shows an example of the waveform of a pulse train 160 of the radar wave. This example shows that a pulse 161 is transmitted in a constant pulse period 162. The round trip distance between the own vehicle and a leading vehicle is calculated from the time difference between a timing when this pulse train 160 is transmitted, and a timing when the pulse train is reflected by the leading vehicle and received, and thereby the distance between two cars is obtained.

The frequency of positioning its own position in the location information acquisition part 125 mounted in the in-vehicle radar device 110 is synchronized with the transmission timing of the radar wave, and at the time of high speed driving, the own position is measured frequently in a short cycle because the moving speed of a vehicle is fast. Moreover, at the time of a low speed driving, the frequency of measuring the own position is reduced to achieve reduction in power because the moving speed of a vehicle is slow.

As shown in Fig. 5A, in the radar wave 151 transmitted from the in-vehicle radar device 110, the pulse train part 160 used for the radar function is overlapped with vehicle information 153, such as its own position. At this time, its own location information may be added for each transmission time of the radar wave 151, or the frequency of overlapping may be reduced. The frequency of overlapping can be varied according to the vehicle speed.

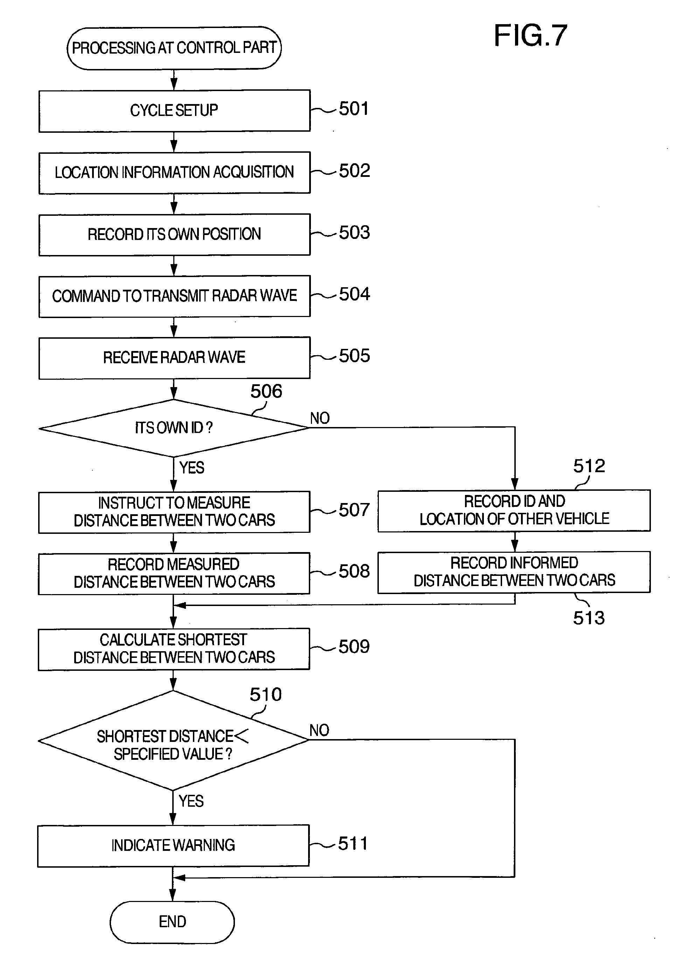

Fig. 6 shows a format example of the radar wave. A preamble part 171 including a known waveform pattern comes first, followed by a unique word (UW) 172 including a predetermined data string indicative of the beginning of the vehicle information data, followed by a first data part 173 including its own vehicle ID and its own location information, followed by a redundancy data 174 for CRC (Cyclic Redundancy Check) used for error detection of the first data part, followed by a second data part 175, and finally followed by a redundancy data 176 for CRC used for error detection of the second data part. In this format, the distance to a front vehicle is measured using the pulse train 160 formed from the pulses shown in Fig. 4, as the preamble part 171, and the own vehicle ID and the location information are transmitted to the surrounding vehicles by the first data part 173. Moreover, the second data part is used for transmitting other information, such as specifying the vehicle ID of a vehicle to serve as a transmission destination. In this way, by employing a format in which an error correction information is attached to each of the two parts; the first data part which is the vehicle location information part and the second data part which is the vehicle-to-vehicle communication data part, a UWB radar robust against clutter can be realized.

In the in-vehicle radar device 110 of Fig. 1, the distance between two cars calculated by the vehicle-to-vehicle distance measurement part 126 is transmitted to the warning function of the driver via the control part 123 and network 127, and the warning function, if the obtained distance between two cars is a predetermined distance or less, issues a warning indicating that a close vehicle is accessing the driver, by means of voice, sound, display or the like. Alternatively, a pre-crash safety function is added in place of the warning function, and the pre-crash safety function activates a driver protection function of its own vehicle according to the distance between two cars. The driver protection function includes the functions to secure the driver by rolling up a seat belt prior to crash, to realize quick service by pressurizing the brake fluid pressure, to activate an airbag or the like, for example.

Next, the process flow for measuring the distance between two cars based on a command from the above-described control part 123 is described with reference to Fig. 7, by taking the device configuration of Fig. 1B as an example. The control part 123 firstly sets the operation cycle of the radar transceiver 122 and the location information acquisition part 125 based on the vehicle speed (step 501). The control part 123 sets a transmission cycle of radar wave and an acquisition cycle of the positioning result to the radar transceiver 122 and to the location information acquisition part 125, respectively, based on speed information (for example, vehicle speed pulse) obtained from an external device. The radar transceiver 122 and the location information acquisition part 125 operate at these established cycles, respectively. In addition, like in the configuration shown in Fig. 3, in the case where the positioning result in the location information acquisition part 185 of the automotive navigation system 312 is used, the control part 123 sets in advance a cycle at which the positioning result is read from the network 127.

Next, the control part 123 reads its own location information obtained from the location information acquisition part 125 (step 502), and stores this to a memory in the control part 123 (step 503). Then, in order to measure the distance to a front vehicle by means of the radar, the control part 123 sends the own vehicle ID and the stored own location information to a vehicle data generation part 182 of the transmission data generation part 131, and instructs the radar wave generation part 181 to transmit a radar wave and also transmits a transmission timing obtained from the timer 135 to the vehicle-to-vehicle distance measurement part 126 (step 504). Next, the data sent to the vehicle data generation part 182 is combined with a pulse train, which the radar wave generation part 181 generates, in a combining section 183 and then is transmitted from the transmitter 130 at a specified timing.

The radar wave transmitted from the transmitting antenna 121A is reflected by surrounding objects and then received by the receiving antenna 121B (step 505). The received radar wave may be the reflection wave of the radar wave which the own vehicle transmitted or may be a radar wave which other vehicle transmitted. Then, the signal of the received radar wave is demodulated in the demodulator 133, and the vehicle ID contained in the received signal in the ID identification part 184 is compared with its own vehicle ID (step 506), and if the own vehicle ID is detected from the received signal, then it is recognized that the received radar wave is the signal for measuring the distance to a valid front vehicle, and this signal is informed to the pattern detection part 134 and the control part 123 (step 507). Upon receipt of this notice, the pattern detection part 134 transmits to the control part 123 a receive timing calculated from the peak value of the cross-correlation between the receiving wave and the preamble part 171 of the transmitted radar wave. In addition, if the own vehicle ID is not detected from the received signal, the measurement of the distance between two cars by means of the radar function is considered to have failed.

In the control part 123, if the own vehicle ID is detected, the transmission timing and the reception timing obtained from the pattern detection part 134 are sent to the vehicle-to-vehicle distance measurement part 126, and then in the vehicle-to-vehicle distance measurement part 126 the value of a distance obtained by multiplying the time difference between these transmission timing and reception timing by the speed of light is divided by two to thereby calculate the distance to a vehicle which reflected the radar wave, and the result is transmitted to the control part 123. The control part 123 stores into an internal memory the obtained distance A to the vehicle (step 508).

If the own vehicle ID is not detected in the received signal, the measurement of the distance to other car is carried out without using the radar function. The control part 123 obtains the vehicle ID and the vehicle location information from the received signal which has been demodulated in the demodulator 133. If this vehicle ID is not equal to the own vehicle ID, the vehicle ID and the vehicle location information obtained from the received signal are recorded into the internal memory (step 512). Moreover, this vehicle location information and the own location information are sent to the vehicle-to-vehicle distance measurement part 126, and from the difference between the location information of the two vehicles the vehicle location is calculated by means of the radar wave. The distance B to the vehicle which the vehicle-to-vehicle distance measurement part 126 informs is recorded into the internal memory (step 513). At this time, it can be assumed that a plurality of other vehicles exist around the vehicle, so a plurality of information pieces consisting of a set of the vehicle ID and vehicle location information may be recorded.

From the distance A between two cars or the distance B between two cars obtained by receiving a radar wave, the shortest distance C between two cars is calculated in the control part 123 (step 509). Next, the control part 123 determines whether the distance C between two cars is a specified value or less (step 510), and if it is the specified value or less, the control part 123 issues a warning indication to an external device (for example, a warning device) (step 511).

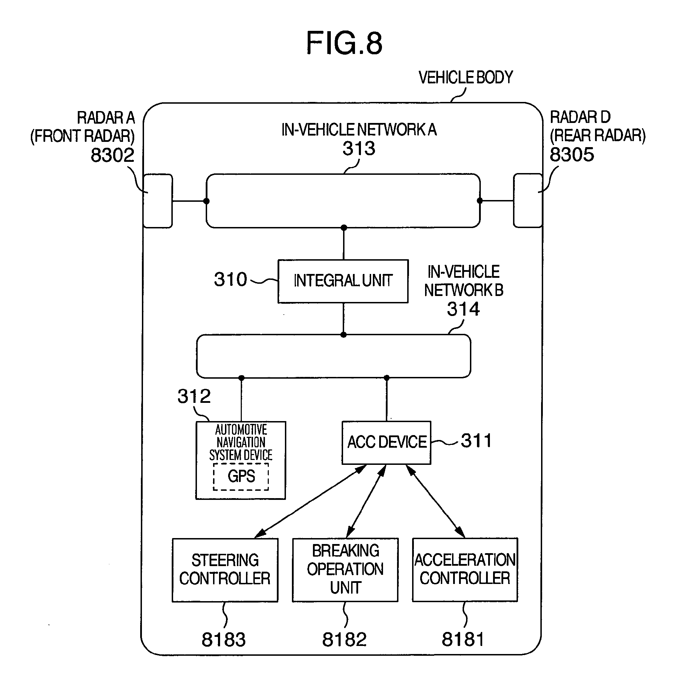

Next, an embodiment of a vehicle driving control system in the case where a plurality of in-vehicle radar devices shown in Fig. 3 are mounted is described with reference to Fig. 8. Assume that in a vehicle body to which radars are mounted, a radar A302 is mounted on the front in the typical traveling direction and a radar D305 is mounted at the back. Although two or more radars may be mounted, it is preferable that they are mounted in the range to cover at least the back and front.

The ACC device 311 which is a radar and vehicle driving control unit is connected via a network. The above-described radar A302 and radar D305 are connected to an in-vehicle network A313. Moreover, the ACC device 311 and the automotive navigation system 312 are connected to an in-vehicle network B314. Furthermore, an integral unit 310 is connected to the both in-vehicle networks A and B. This integral unit 310 comprises the functions of the control part 123 and the vehicle-to-vehicle distance measurement part 126 of the in-vehicle radar device shown in Fig. 1B, and combines the controls of the radar functions each into one. Moreover, it collects and processes the information on the respective radars A and D and also has a gateway function between the in-vehicle network A313 and in-vehicle network B314.

For example, the time to crash is calculated from the results from a relative speed of its own vehicle to other vehicle, the distance measurement, and the direction, , and it is determined whether or not an alarm concerning other vehicle of the shortest crashing time or a pre-crash operation by the own vehicle is carried out, and then as required, a vehicle control information used for pre-crash (a brake command, a steering avoidance command) is transmitted to the ACC device 311, and a command for an alarm display or alarm tone generation is transmitted to the automotive navigation system 312. Moreover, the integral unit 310 issues to the radars A and D commands to change the power and frequency of the transmission electric wave by means of a terrain location information of the vehicle (GPS information) from the automotive navigation system 312. This specific change method will be described later.

Although in this embodiment there are two network systems; the in-vehicle network A313 to which the radars A and D are connected, and the in-vehicle network B314 to which the ACC device 311 and the automotive navigation system 312 are connected, these are prepared for the purpose of distributing the loading of the network communication, and if the network loading is low, all of the radars A and D and ACC device 311 and automotive navigation system 312 may be connected to one network. Moreover, the integral unit 310 may be omitted by having the function of the integral unit 310 built into the radars A and D.

A steering control unit 8183, an accelerator control unit 8181, and a brake operating unit 8182 are connected to the ACC device 311, which ACC device 311 indicates the control parameters (command values of a steer angle, accelerator open ratio, brake thrust) to the respective units. In response to the necessity for the respective vehicle controls, such as follow-up driving control, crash avoidance control, pre-crash control, each actuator is activated. The automotive navigation system 312, integral unit 310, and ACC device 311 are connected to the in-vehicle network B314 for exchanging information. Moreover, the integral unit 310 is connected to the in-vehicle network A313 to receive information from the radars A and D, and also instructs to control the radar transmission signal.

Electric wave interference with other existing wireless system needs to be prevented since broadband frequencies are used in Ultra Wide Band Communication. Then, in Ultra Wide Band Communication, while a wide frequency band is used, the transmission power is suppressed to suppress the occurrence of electric wave interference with other wireless system, however, a low transmission power would result in a small communication coverage. As a technique of preventing the electric wave interference and putting the frequency resource to effective use, an idea of cognitive radio, wherein other wireless communication equipment actively uses unused frequency bands for each area, is proposed in "Cognitive radio has started: Communicate over convenient broadcasting bands", Nikkei Electronics, October 25, 2004, P. 43. Also in the in-vehicle radar device using the present invention, it is important to prevent the electric wave interference with the surrounding wireless system so as not to affect other wireless system and thus to coexist with other wireless system. Then, the present invention is intended to realize an in-vehicle wireless device or an obstacle detection unit, wherein the operation frequency band and transmission power are varied based on a predetermined location information on a map. Then, in the radar function of a multi-banded Ultra Wide Band Communication and in the vehicle-to-vehicle communication, the operation frequency band is made variable as to suitably select the operating frequency band for each region, the unused frequency which does not affect the wireless communication device in the region is used, and the transmission power is controlled corresponding to the frequency band to use. In this Ultra Wide Band Communication, as a vehicle moves, the frequency bands which the surrounding wireless system uses are calculated from the information on the current location detected by the location information acquisition part which detects its own position, and thereby, the frequencies available in each region corresponding to the situation of surrounding wireless communication equipment are made the frequency band to use in the Ultra Wide Band Communication, and the transmission power of this frequency band is increased to expand the communication coverage. In this way, it is also possible to extend the radio wave distance as to be able to communicate with vehicles in a wider range.

Moreover, accordingly, in the present invention, even when a vehicle moves, the operating frequency band and transmission power in the radar function and the vehicle-to-vehicle communication can be controlled such that the influence on other wireless system is suppressed by detecting the frequencies which the location information acquisition part detecting its own position and the surrounding wireless system use. As a result, even when the vehicle moves, the electric wave interference with surrounding wireless system can be prevented.

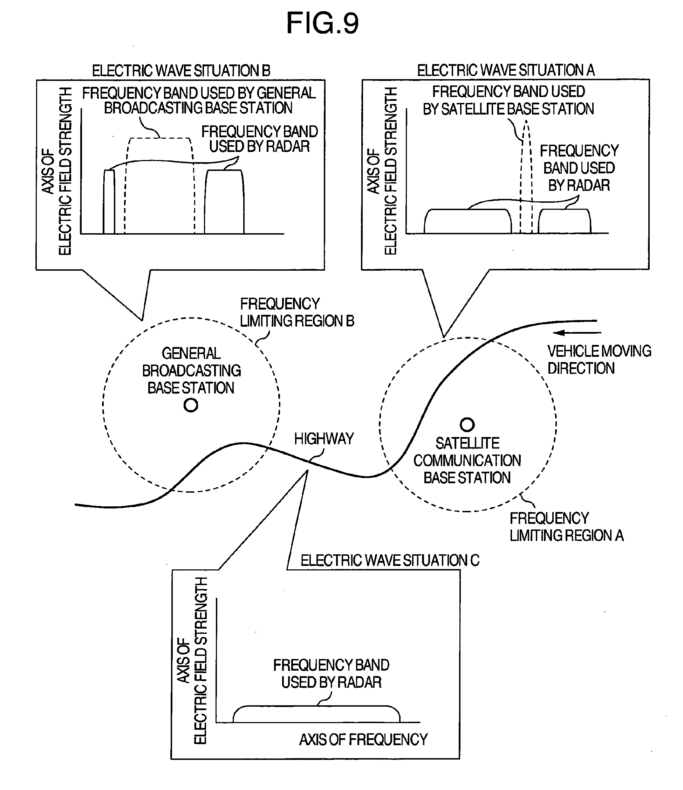

Fig. 9 shows a relationship between vehicle location information, a radar operating frequency band, and a transmission power. The in-vehicle radar device 110 controls to change the frequency band and transmission power in accordance with the above-described GPS information. The automotive navigation system 312 records in advance, as a database, the area information including limited frequency bands. In this database, for each mesh in each area, the frequency bands to be used there are registered. In the example of Fig. 9, for a map mesh around a satellite communication base station, the frequency bands of electric wave used in the base station are registered in advance as the limited frequency bands, and for a map mesh around a general broadcasting base station, the frequency bands to be used in the broadcasting base station are registered in advance as the limited frequency bands. The automotive navigation system device 312 reads the frequency bands of which usage is limited in the area with reference to a mesh in which the determined current location is included, and transmits it to the radar device 110 via a network. The control part 123 which receives this information indicates a power value to the transmission data generation part 131, so that the value obtained by integrating the power spectrum of the available frequency bands with respect to the available frequency bands does not exceed a limited power.

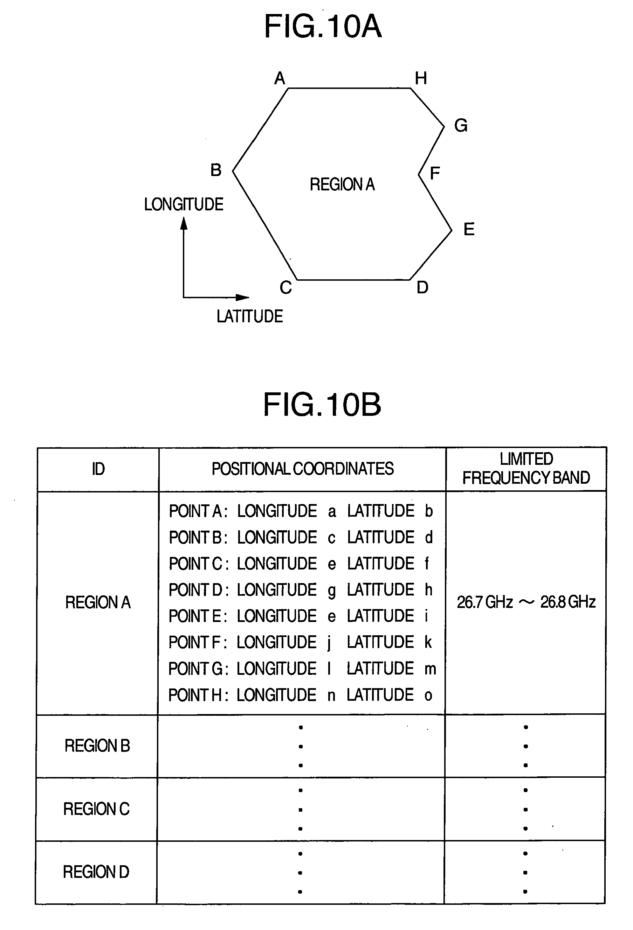

Alternatively, as shown in Fig. 10B, the automotive navigation system 312 registers in advance, as a database, area information including limited available frequency bands. In Fig. 10A, for the information on the limited frequencies, a region enclosed by the positional coordinates of the places expressed by the longitude-latitude information is defined as a region where frequency bands are limited. The ID, positional coordinates group, and limited frequency bands are associated to each other for each enclosed region. Based on the longitude-latitude information obtained from a GPS, it can be determined from a known geometrical equation (for example, a linear equation) whether it is inside or outside the area.

The electric wave situations A and B in the frequency limiting regions A and B of Fig. 9 show that the frequency bands which the radar by means of Ultra Wide Band Communication can use are limited and that the narrower the available frequency band, the greater the allowed value of the peak value of transmitting electric power becomes. In the specified low power radio device at present, the power from an antenna is 10 mW or less, and if the modulation frequency band is expanded, the peak value of transmission electric power needs to be reduced. In the outside of the frequency limiting regions (electric wave situation C), the setup is made by reducing the transmission power and extending the frequency band.

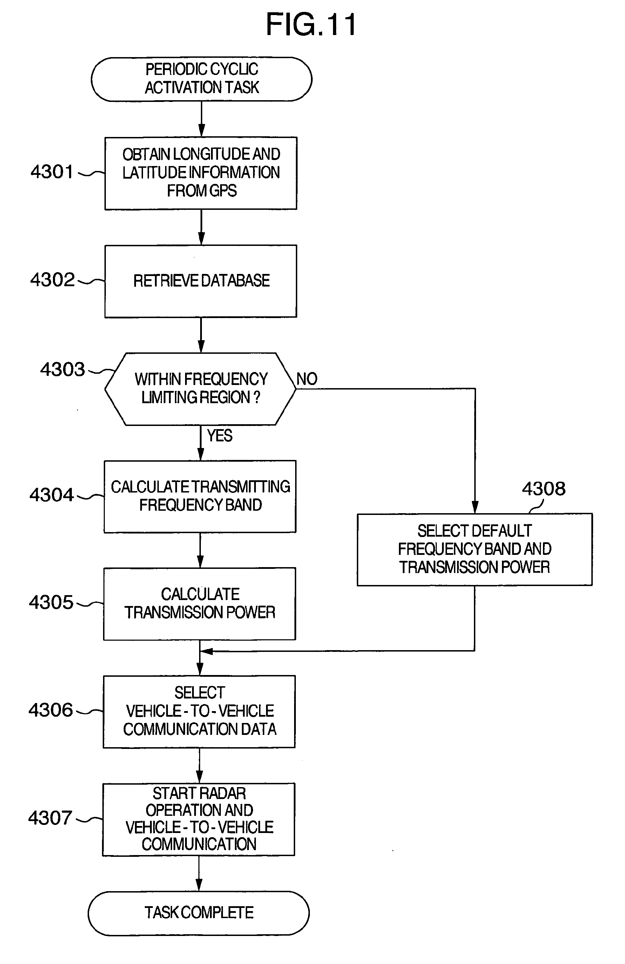

Fig. 11 shows the procedure of setting the limited frequency and the transmission power. The longitude and latitude of its own vehicle are obtained in the location information acquisition parts 125, 185 through a GPS or the like (step 4301). Based on the obtained own location information, frequency limiting regions in the current position are retrieved from the database shown in Fig. 10B (step 4302). If it is determined from this retrieved result that the frequency is limited (step 4303), the available transmitting frequency band is calculated (step 4304). The peak power is limited so that the average power in the calculated available transmitting frequency band is equal to the upper limit of a reference power (for example, 10 mW/1M) (step 4305). Next, the data type to transmit is selected. At this time, the data type is selected in descending order from the highest priority because the amount of information which can be transmitted is also limited due to the width of the frequency band, (step 4306). With the frequency band and transmission power selected in this manner, the radar function and the vehicle-to-vehicle communication function by means of Ultra Wide Band Communication are started (step 4307). Moreover, if it is determined that the current position is in a region in which the frequency is not limited, a predetermined specified frequency band and transmission power are selected to proceed to Step 4306.

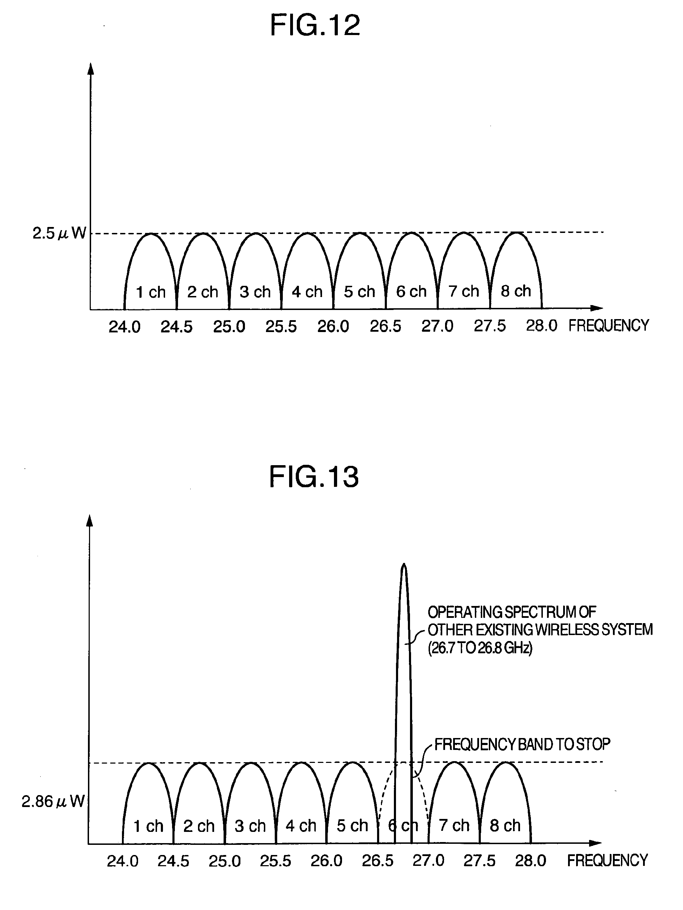

In Fig. 12, an Ultra Wide Band Communication, in which for the predetermined specified frequency band and transmission power, a 24.0 to 28.0 GHz band is assigned as the operating frequency and the upper limit of power is set to 10 mW/1M, is described as an example. Fig. 12 shows the operating frequency spectrum of the radar device in the region C outside the frequency limiting regions, in which region C the frequency is not limited, (electric wave situation C). In the case where an Ultra Wide Band Communication of 8-channel multi-band is carried out using a 4. 0 GHz bandwidth (0.5 GHz width for each channel), the peak power is calculated as follows.

$$10 \text{ mW}/(4.0 \text{ GHz}/1.0 \text{ MHz}) = 2.5 \text{ } \mu\text{W}$$

Fig. 13 is the spectrum of the radar device in the frequency limiting region A under the same upper limit of power as the example shown in Fig. 12. Since a 26.7 to 26.8 GHz band is used by other existing wireless system, a 26.5 to 27.0 GHz band corresponding to the sixth channel is stopped and the remaining 7 channels are used. The peak power in this case is calculated as follows.

$$10 \text{ mW}/(3.5 \text{ GHz}/1.0 \text{ MHz}) = 2.86 \text{ } \mu\text{W}$$

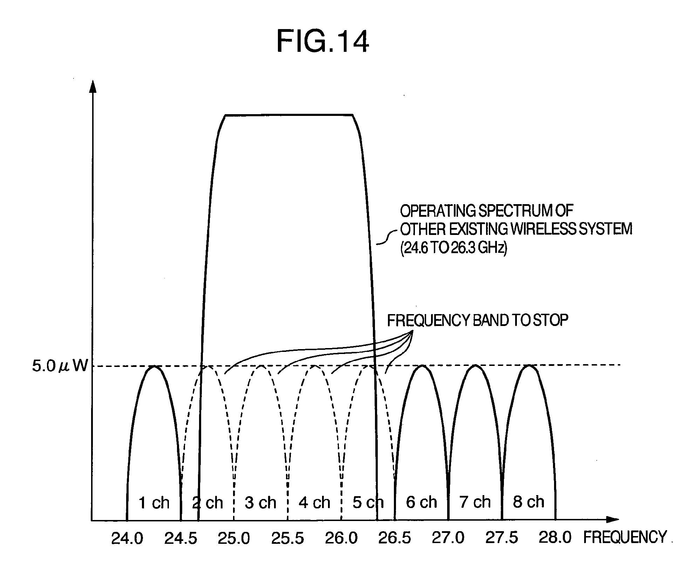

Fig. 14 is the spectrum of the radar device in the frequency limiting region A under the same upper limit of power as the example shown in Fig. 12. Here, because a 24.6 to 26.3 GHz band is used by other existing wireless system, the use of the duplicating 24.5 to 26.5 GHz band (corresponding to four channels) is stopped and the Ultra Wide Band Communication is carried out using the remaining four channels. The peak power in this case is calculated as follows.

$$10 \text{ mW}/(2.0 \text{ GHz}/1.0 \text{ MHz}) = 5 \text{ } \mu\text{W}$$

Here, the peak power of 2.5 $\mu$W of the region C outside the frequency limiting regions and the peak power of 5 $\mu$W in the frequency limiting region B have the relationship in the voltage of 1 to square root of 2, respectively. That is, the latter is considered to have approximately 1.41 times the electric wave range as compared with the former, in other words, even if the distance between two cars is taken 1.41 times longer, the measurement of the distance to a front car can be made by the radar with the same S/N ratio.

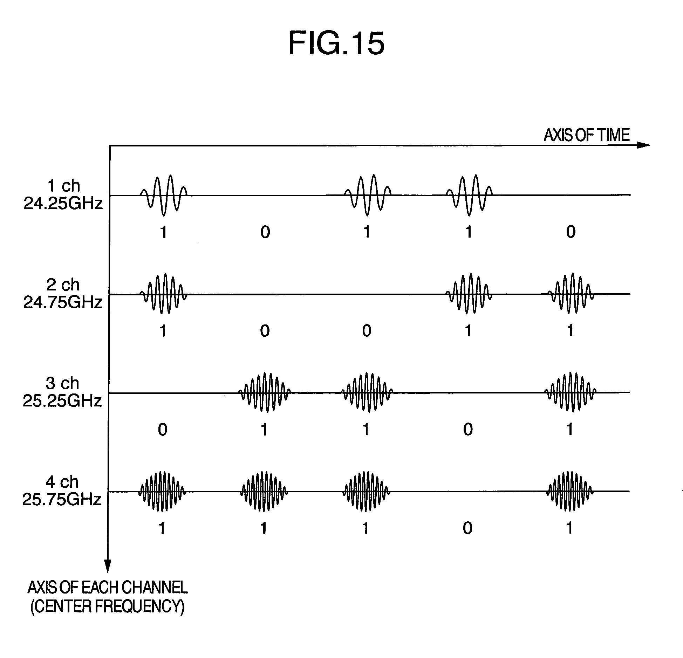

Fig. 15 describes the principle of the data communication in each frequency channel. This view shows an image in which a pulse wave having a center frequency of each channel of 1ch to 4 ch is transmitted on the time axis, and the waveform of the pulse wave is an image of the amplitude of the electric field of electric wave. If a time zone without pulse is expressed as 0 and a time zone with a pulse as 1, then a data communication of 0/1 is possible. A sender simultaneously transmits frequency bands (ch) of which center frequency differs to each other, and a receiving side extracts the data by separating into each frequency band. This method is the same as that of a Ultra Wide Band Communication technique using the OFDM (Orthogonal Frequency Division Multiplexing) Modulation.

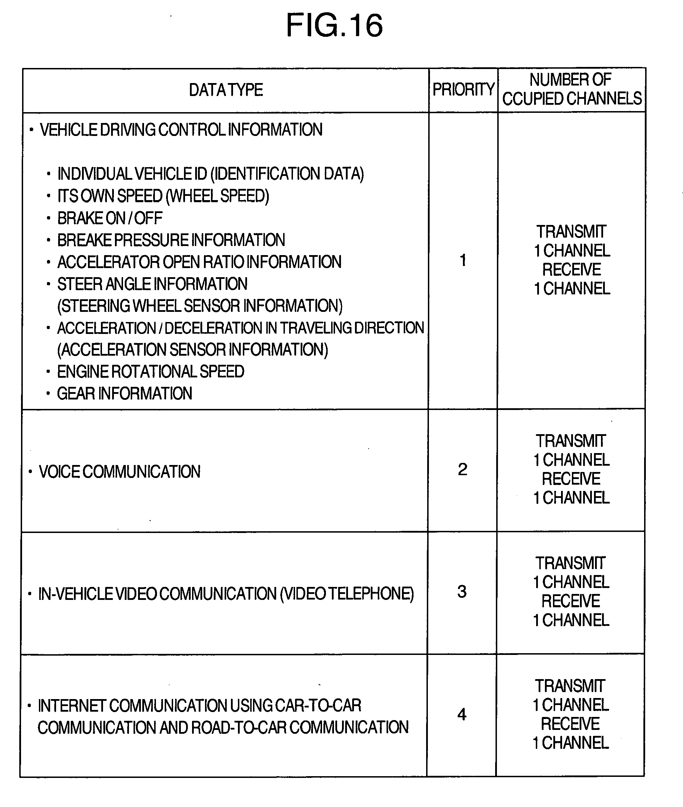

Although the data transfer rate in the vehicle-to-vehicle communication is increased by widening the frequency band, which is used in the Ultra Wide Band Communication, if the available channels are limited, it is necessary to stop the communication data with a low priority and assign the data with a high priority. As the communication contents used for the vehicle-to-vehicle communication, two types; (1) Vehicle driving control information (in particular, information related to driving stability, ability to follow the front car, and safety) and (2) Information required for convenience service for drivers, can be considered. For the data to be sent concerning the respective communication contents, priorities as shown in Fig. 16 can be considered. Priority 1 (vehicle driving control information) is the minimum required information for the driving control using the vehicle-to-vehicle communication, and one channel each (a total of two channels) is assigned for transmitting and receiving to and from a leading vehicle or a rear vehicle, in this example. In accordance with the number of available frequency bands (the number of channels) corresponding to a frequency limiting region, the assignment is made in descending order from the highest priority of the data type shown in Fig. 16. In this example, the priority is determined in the order of the vehicle driving control information, voice message, in-vehicle video communication (video telephone), Internet communication using a car-to-car communication and a road-to-car communication, and the assignment is made in this order.

If only a band for one channel can be assigned as the available frequency band, the vehicle-to-vehicle communication function itself may be stopped to operate only the radar function. Then, in the case where only the band for one channel is used, the transmission power can be amplified more as compared with the case where a plurality of channels are used, as described above. For this reason, it is possible to take the longer distance between two cars as compared with the case where a plurality of channels are used, and to carry out the follow-up driving only using the information from the radar function.

In contrast, if two or more channels can be assigned as the available frequency band, a more responsive vehicle control can be carried out by transmitting and receiving the vehicle driving control information between the own vehicle and the surrounding vehicles, thereby allowing the follow-up driving with a shorter distance between two cars as compared with the follow-up driving using only the radar function. For example, assuming that the measurement delay of the distance between two cars and relative speed by means of the radar function takes one second, and in contrast, also assuming that the vehicle speed information acquisition of a leading vehicle by means of the vehicle-to-vehicle communication takes 0.05 sec., then, in the follow-up driving using only the radar function, the time between cars (= distance between two cars/relative speed) needs to secure an additional time (1-0.05 = 0.95 sec.).

In the case where the distance between two cars is shortened using the vehicle driving control information by means of the vehicle-to-vehicle communication as described above, the benefit of mitigation in the air resistance against the own vehicle due to the leading vehicle can be obtained. That is, reduction in the fuel consumption and mitigation in the degradation of mechanical performance of the own vehicle can be anticipated by decreasing the driving resistance. Moreover, mitigation in traffic congestion can also be anticipated because reduction in the distance between two cars also allows increase in the number of driving vehicles per a route length.

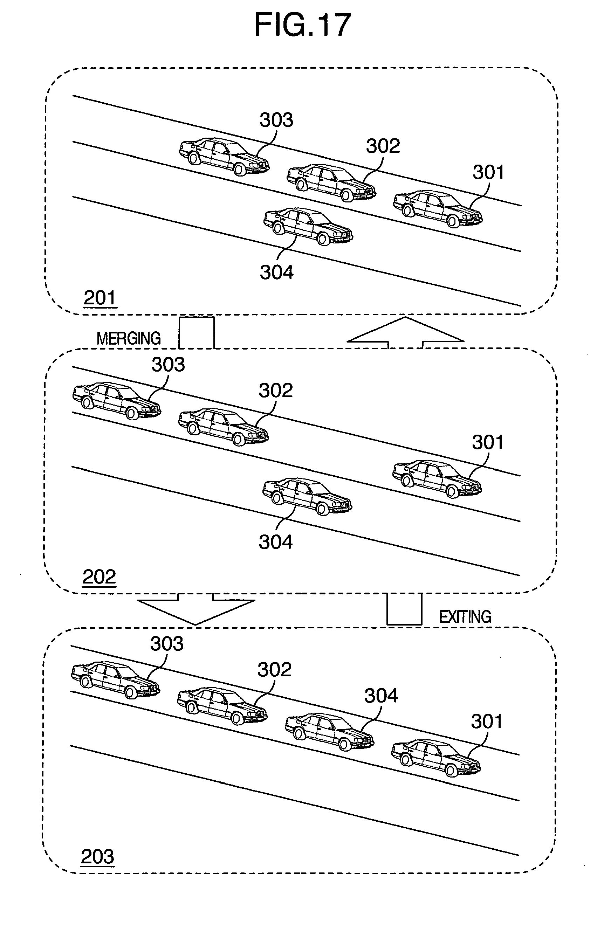

Next, a car platoon by a plurality of vehicles equipped with the above-described in-vehicle radar device is described using Fig. 17. Although four vehicles 301 to 304 are described in Fig. 17, the number of vehicles just needs to be two or more. Each vehicle comprises the same functions, and the vehicle radars 8302, 8305 shown in Fig. 8 are connected to the acceleration control part 8181, break operation unit 8182, steering control part 8183, and a switch for entering/leaving a car platoon (not shown), via the network 127. Under a command from the integral unit 310, acceleration of the vehicle is carried out in the acceleration control part 8181, and deceleration of the vehicle in the breaking operation unit 8182, and changes of the traveling direction in the steering control part 8183.

First, a situation is described in which the vehicle 304 newly enters and merges with the car group currently driving in a platoon formation. In a situation 201, the vehicles 301 to 303 are driving in a car platoon mode. In this situation, the vehicle 302 measures the distance to the vehicle 301 and the vehicle 303 measures the distance to the vehicle 302 by means of the above-described in-vehicle radar devices, respectively, and they carry out the vehicle control so that the distance between two cars is constant. Although in the vehicle 301 a personal driving is carried out by the driver because the vehicle 301 is leading, its traveling direction is transmitted to the following vehicles 302, 303 by means of the communication function of the in-vehicle radar device. In the vehicles 302, 303, an appropriate steering operation is carried out based on the obtained information on the traveling direction.

Moreover, in the vehicle 301 which leads the car platoon, the transmission power of the radar mounted on the front is set to the allowed maximum value in order to detect further distant obstacles on the road as compared with the following vehicles 302, 303, while in the following vehicles 302, 303 the transmission power is set to the minimum transmission power and minimum detection range required for securing the vehicle-to-vehicle communication and the current distance between two cars. Accordingly, by controlling the transmission power and transmitting frequency band of the radar device using the location information on the vehicle, the reduction in clutter, reduction in interference with other wireless system, or reduction in the possibility of the electromagnetic interference of the surrounding environment can be made.

In this situation, when the vehicle 304 equipped with the in-vehicle radar device joins the car platoon, the driver of the vehicle 304 turns on the switch for entering/leaving a car platoon to obtain a permission to merge with the car platoon from the front and back vehicles 301, 302 driving in the platoon formation. By turning on this switch, the vehicle ID, location information and vehicle driving control information of the vehicle 304 are transmitted from the in-vehicle radar device of the vehicle 304 to the vehicles 301 to 303 forming the car platoon. It is verified using the sent vehicle driving control information whether to be able to maintain an appropriate distance between two cars and appropriate vehicle speed of the vehicle in the platoon formation, and a predetermined time.

For example, if the vehicle driving abilities (acceleration ability, deceleration ability) of the vehicle 304 deviates significantly from the average of the vehicles in the car platoon formation, a permission to merge with the car platoon cannot be obtained. For the vehicles in the car platoon formation, a small variation concerning at least the acceleration ability and deceleration ability would be advantageous so that the control over the individual behavior of the vehicles is made easily. In case of allowing the vehicle 304 to merge with the car platoon, the vehicle 302, which is a vehicle located nearest to the vehicle 304 according to the transmitted location information, transmits to the vehicle 304 a permission signal to enter the car platoon, and the vehicle 302 also controls the distance to the vehicle 301, which is the front vehicle, as to be such a distance long enough for the vehicle 304 to be able to enter. This stage is shown in a situation 202.

Then, the driver of the vehicle 304 swings the wheel and guides the vehicle 304 in between the vehicle 301 and the vehicle 302. The situation in which the vehicle 304 joined the car platoon thereafter is shown in a situation 203. If the vehicle 302 recognizes that the vehicle location which the vehicle 304 transmits falls in an appropriate range in between the vehicle 301 and the vehicle 302, the vehicle 302 will inform the vehicle 304 of the completion of joining the car platoon. Upon receipt of this notice, the vehicle 304 starts to control the distance to the front vehicle 301 as to be an appropriate distance. Moreover, the vehicle 302 located behind the vehicle 304 recognizes that the front vehicle is the vehicle 304, and controls the distance to the vehicle 304 as to be an appropriate one. Accordingly, a car platoon by the vehicles 301 to 304 is realized.

Next, a situation is described in which the vehicle 304 is leaving the vehicles driving in the platoon formation. The situation of this car platoon is shown in a situation 203. This is a behavior at the time of leaving the car platoon for the reasons such as that the vehicle 304 approaches the vicinity of a destination of the route, which destination is in advance set to the automotive navigation system or the like, and leaving the car platoon is informed to the drivers in advance. At this point, the driver of the vehicle 304 swings the steering wheel to the right after visually checking the right lane to confirm safety. After detecting that the vehicle's operation (either one of steering operation, braking operation, or acceleration operation) by this driver himself/herself has been started, a leaving signal including the vehicle ID is transmitted from the in-vehicle radar device mounted in the vehicle 304, and then the car-platoon control of the vehicle 304 is released.

Moreover, several tens of seconds before announcing to the driver about the situation in which the vehicle 304 is leaving the car platoon, a preparation is made in advance so that information that the vehicle 304 is leaving is transmitted also to the following vehicles in advance and the following vehicles secure a sufficiently safe distance between two cars. Accordingly, after securing the sufficient distance to the following vehicle 302, the vehicle 304 will inform the driver of leaving the car platoon. The vehicle 302 recognizes, from the vehicle ID of the received leaving signal, that the front car of the own vehicle has entered the leaving operation. At this time, the vehicle 302 stops to control the distance to the front vehicle and controls the vehicle speed constant. Then, the vehicle 302 receives repeatedly the location information of the vehicle 304 which the vehicle 304 transmits, and the vehicle 302 detects that the vehicle 304 has been away beyond a certain distance from the car platoon. When the vehicle 304 has completed leaving the car platoon, the situation will be like the situation 202. When the vehicle 302 recognizes the vehicle 304 has left, it controls the distance to the front vehicle as to be a predetermined distance by the in-vehicle radar device mounted in the vehicle 302, thereby forming the car platoon by the vehicles 301 to 303 and resulting in a situation shown in the situation 201. In addition, also in the case where the vehicle 304 can not keep the vehicle speed, which is specified in the car platoon, due to failures, a warning is similarly transmitted to the following vehicle 302, before leaving, as to secure the appropriate distance between two cars.

According to the present invention, the radar device using Ultra Wide Band Communication can detect the position and conditions of an individual vehicle easily in addition to detecting obstacles existing therearound.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. An in-vehicle radar device (110) provided with a transmission and receiving part (130, 132) for transmitting and receiving a radar wave (140), the in-vehicle radar device (110) for measuring the distance between an own vehicle (100) and an object (101), comprising:

a positioning part (125) for positioning its own location information;

a transmission data generation part (131) for generating a radar wave, the radar wave being made by adding vehicle information containing at least its own vehicle ID and the own location information to a generated radar wave pulse;

a receiving wave identification part (184) which, when a receiving wave is not the reflection wave of a radar wave which the own in-vehicle radar device (110) transmitted, extracts a vehicle information of the receiving wave; and

a distance measurement part (126) which, when the receiving wave is the reflection wave of a radar wave which the own in-vehicle radar device (110) transmitted, calculates the distance to the object (101) from a delay time of the receiving wave, and which, when the receiving wave is not the reflection wave of the radar wave which the own in-vehicle radar device (110) transmitted, calculates the distance to a relevant vehicle by using the extracted vehicle information.

2. The in-vehicle radar device (110) according to claim 1, wherein the transmission data generation part (131) changes the transmission cycle of the radar wave according to the driving speed of the own vehicle (100).

3. The in-vehicle radar device (110) according to claim 1, wherein the transmission data generation part (131) generates a radar wave made by adding a signal corresponding to the vehicle information to a signal having a waveform of repeating a same waveform in a certain cycle.

4. The in-vehicle radar device (110) according to claim 1, wherein the distance measurement part (126) calculates the distance and direction of a vehicle, which transmitted the receiving wave, from location information contained in the vehicle information extracted in the receiving wave identification part (184) and the own location information by the positioning part (125).

5. The in-vehicle radar device (110) according to claim 1, wherein the radar wave uses a plurality of frequency bands, the in-vehicle radar device (110) comprising:

map information which defines frequencies to use, based on the longitude and latitude;

an own position measurement means for measuring its own position; and

a control means (123) which changes the frequency band to use, in accordance with the operating frequencies of the map information according to the location information by the own position measurement means.

6. The in-vehicle radar device (110) according to claim 5, wherein the control means (123) changes the power of transmitting electric wave according to the frequency band to use.

7. A communication device (110) provided with a transmitter (130) for transmitting a radar wave from a transmission antenna (121A) and a receiver (132) for receiving a radar wave via a receiving antenna (121B), the communication device (110) comprising:

a positioning part (125) for positioning its own location information;

a transmission data generation part (131) which generates a radar wave (140), the radar wave being made by adding vehicle information containing at least location information by the positioning part (125) and the own vehicle ID to a generated radar wave pulse;

a control part (123) for specifying a transmission timing of the generated radar wave;

a receiving wave identification part (184) which extracts vehicle information of a receiving wave having a vehicle ID different from its own vehicle ID, based on a vehicle ID of the receiving wave received in the receiver (132); and

a distance measurement part (126) which calculates the distance and direction to a vehicle, which transmitted a relevant vehicle information, from a location information contained in the extracted vehicle information and its own location information by the positioning part (125).

8. The communication device (110) according to claim 7, wherein the transmission data generation part (131) changes the transmission cycle of the radar wave according to the driving speed of the own vehicle (100).

9. The communication device (110) according to claim 7, wherein the transmission data generation part (131) generates a signal having a waveform of repeating a same waveform in a certain cycle followed by a radar wave containing a signal corresponding to the vehicle information.

10. The communication device (110) according to claim 5, wherein the radar wave uses a plurality of frequency bands, the communication device (110) comprising:

map information which defines frequencies to use, based on the longitude and latitude;
an own position measurement means for measuring its own position; and
a control means (123) which changes the frequency band to use, in accordance with the operating frequency of the map information according to the location information by the own position measurement means.

11. The communication device (110) according to claim 10, wherein the control means (123) changes the type of data to transmit, according to the frequency band to use.

# FIG.1A

# FIG.1B

# FIG.2

# FIG.3

# FIG.4

160

PULSE TRAIN

161

162

# FIG.6

151

171      172      173      174      175                    176

| PR | UW | DAT1 | CRC1 | DAT2 | CRC2 |

153

# FIG.5A

160 153

AT THE TIME OF
HIGH SPEED DRIVING

151

AT THE TIME OF
MEDIUM SPEED DRIVING

AT THE TIME OF
LOW SPEED DRIVING

TIME

# FIG.5B

TRANSMISSION
INTERVAL

INTERVAL AT THE TIME OF
LOW SPEED DRIVING

INTERVAL AT THE TIME OF
MEDIUM SPEED DRIVING

INTERVAL AT THE TIME OF
HIGH SPEED DRIVING

LOWER LIMIT OF THE INTERVAL OF RADAR WAVE

VEHICLE SPEED

# FIG.7

```
        ( PROCESSING AT CONTROL PART )
                      │
                      ▼
        ┌─────────────────────────┐
        │      CYCLE SETUP        │──── 501
        └─────────────────────────┘
                      │
                      ▼
        ┌─────────────────────────┐
        │ LOCATION INFORMATION    │──── 502
        │      ACQUISITION        │
        └─────────────────────────┘
                      │
                      ▼
        ┌─────────────────────────┐
        │  RECORD ITS OWN POSITION│──── 503
        └─────────────────────────┘
                      │
                      ▼
        ┌─────────────────────────┐
        │ COMMAND TO TRANSMIT     │──── 504
        │      RADAR WAVE         │
        └─────────────────────────┘
                      │
                      ▼
        ┌─────────────────────────┐
        │   RECEIVE RADAR WAVE    │──── 505
        └─────────────────────────┘
                      │
                     506
                      ▼
                 ╱─────────╲                    NO
                ╱ ITS OWN ID?╲ ──────────────────────────┐
                 ╲─────────╱                              │
                      │ YES                               ▼
                      ▼                                  512
        ┌─────────────────────────┐      ┌─────────────────────────┐
        │   INSTRUCT TO MEASURE   │─507  │      RECORD ID AND      │
        │ DISTANCE BETWEEN TWO CARS│     │ LOCATION OF OTHER VEHICLE│
        └─────────────────────────┘      └─────────────────────────┘
                      │                               │
                      ▼                               ▼
        ┌─────────────────────────┐      ┌─────────────────────────┐
        │   RECORD MEASURED       │─508  │    RECORD INFORMED      │
        │ DISTANCE BETWEEN TWO CARS│     │ DISTANCE BETWEEN TWO CARS│
        └─────────────────────────┘      └─────────────────────────┘
                      │                              513
                      │◄──────────────────────────────┘
                      ▼
        ┌─────────────────────────┐
        │   CALCULATE SHORTEST    │──── 509
        │ DISTANCE BETWEEN TWO CARS│
        └─────────────────────────┘
                      │
                     510
                      ▼
                 ╱─────────╲                    NO
                ╱ SHORTEST  ╲ ──────────────────────┐
               ╱ DISTANCE <  ╲                       │
               ╲SPECIFIED VALUE?                     │
                ╲───────────╱                        │
                      │ YES                          │
                      ▼                              │
        ┌─────────────────────────┐                  │
        │    INDICATE WARNING     │──── 511          │
        └─────────────────────────┘                  │
                      │◄──────────────────────────────┘
                      ▼
                  (  END  )
```

# FIG.8

VEHICLE BODY

RADAR A
(FRONT RADAR)
8302

IN-VEHICLE NETWORK A
313

RADAR D
(REAR RADAR)
8305

310 — INTEGRAL UNIT

IN-VEHICLE
NETWORK B
314

312

AUTOMOTIVE
NAVIGATION
SYSTEM DEVICE

GPS

ACC DEVICE — 311

STEERING
CONTROLLER

BREAKING
OPERATION
UNIT

ACCELERATION
CONTROLLER

8183

8182

8181

# FIG.9

ELECTRIC WAVE SITUATION B

AXIS OF ELECTRIC FIELD STRENGTH

FREQUENCY BAND USED BY GENERAL BROADCASTING BASE STATION

FREQUENCY BAND USED BY RADAR

ELECTRIC WAVE SITUATION A

AXIS OF ELECTRIC FIELD STRENGTH

FREQUENCY BAND USED BY SATELLITE BASE STATION

FREQUENCY BAND USED BY RADAR

FREQUENCY LIMITING REGION B

GENERAL BROADCASTING BASE STATION

○

VEHICLE MOVING DIRECTION

HIGHWAY

○
SATELLITE COMMUNICATION BASE STATION

FREQUENCY LIMITING REGION A

ELECTRIC WAVE SITUATION C

AXIS OF ELECTRIC FIELD STRENGTH

FREQUENCY BAND USED BY RADAR

AXIS OF FREQUENCY

# FIG.10A

# FIG.10B

| ID | POSITIONAL COORDINATES | LIMITED FREQUENCY BAND |
|---|---|---|
| REGION A | POINT A: LONGITUDE a LATITUDE b<br>POINT B: LONGITUDE c LATITUDE d<br>POINT C: LONGITUDE e LATITUDE f<br>POINT D: LONGITUDE g LATITUDE h<br>POINT E: LONGITUDE e LATITUDE i<br>POINT F: LONGITUDE j LATITUDE k<br>POINT G: LONGITUDE l LATITUDE m<br>POINT H: LONGITUDE n LATITUDE o | 26.7 GHz ～ 26.8 GHz |
| REGION B | ⋮ | ⋮ |
| REGION C | ⋮ | ⋮ |
| REGION D | ⋮ | ⋮ |

# FIG.11

```
        ┌─────────────────────────┐
        │  PERIODIC CYCLIC         │
        │  ACTIVATION TASK         │
        └─────────────────────────┘
                    │
                    ▼
        ┌─────────────────────────┐
4301    │ OBTAIN LONGITUDE AND    │
        │ LATITUDE INFORMATION    │
        │ FROM GPS                │
        └─────────────────────────┘
                    │
                    ▼
        ┌─────────────────────────┐
4302    │ RETRIEVE DATABASE       │
        └─────────────────────────┘
                    │
                    ▼
4303    ╱─────────────────────────╲   NO
        │ WITHIN FREQUENCY        ├──────────┐
        │ LIMITING REGION ?       │          │
        ╲─────────────────────────╱          │
                    │ YES                     │
                    ▼                         │
        ┌─────────────────────────┐          │
4304    │ CALCULATE TRANSMITTING  │          │
        │ FREQUENCY BAND          │       4308│
        └─────────────────────────┘          ▼
                    │          ┌───────────────────────────┐
                    ▼          │ SELECT DEFAULT            │
        ┌─────────────────────┐│ FREQUENCY BAND AND        │
4305    │ CALCULATE           ││ TRANSMISSION POWER        │
        │ TRANSMISSION POWER  │└───────────────────────────┘
        └─────────────────────┘          │
                    │                     │
                    ▼◄────────────────────┘
        ┌─────────────────────────┐
4306    │ SELECT                  │
        │ VEHICLE - TO - VEHICLE  │
        │ COMMUNICATION DATA      │
        └─────────────────────────┘
                    │
                    ▼
        ┌─────────────────────────┐
4307    │ START RADAR             │
        │ OPERATION AND           │
        │ VEHICLE - TO - VEHICLE  │
        │ COMMUNICATION           │
        └─────────────────────────┘
                    │
                    ▼
        ┌─────────────────────────┐
        │  TASK COMPLETE          │
        └─────────────────────────┘
```

# FIG.12

# FIG.13

# FIG.14

OPERATING SPECTRUM OF
OTHER EXISTING WIRELESS SYSTEM
(24.6 TO 26.3 GHz)

FREQUENCY BAND TO STOP

5.0 μ W

| 1 ch | 2 ch | 3 ch | 4 ch | 5 ch | 6 ch | 7 ch | 8 ch |

24.0  24.5  25.0  25.5  26.0  26.5  27.0  27.5  28.0  FREQUENCY

# FIG.15

AXIS OF TIME →

1 ch
24.25GHz

1      0      1      1      0

2 ch
24.75GHz

1      0      0      1      1

3 ch
25.25GHz

0      1      1      0      1

4 ch
25.75GHz

1      1      1      0      1

AXIS OF EACH CHANNEL
(CENTER FREQUENCY)

# FIG.16

| DATA TYPE | PRIORITY | NUMBER OF CCUPIED CHANNELS |
|---|---|---|
| • VEHICLE DRIVING CONTROL INFORMATION<br><br>  • INDIVIDUAL VEHICLE ID (IDENTIFICATION DATA)<br>  • ITS OWN SPEED (WHEEL SPEED)<br>  • BRAKE ON / OFF<br>  • BREAKE PRESSURE INFORMATION<br>  • ACCELERATOR OPEN RATIO INFORMATION<br>  • STEER ANGLE INFORMATION<br>    (STEERING WHEEL SENSOR INFORMATION)<br>  • ACCELERATION / DECELERATION IN TRAVELING DIRECTION<br>    (ACCELERATION SENSOR INFORMATION)<br>  • ENGINE ROTATIONAL SPEED<br>  • GEAR INFORMATION | 1 | TRANSMIT<br>1 CHANNEL<br>RECEIVE<br>1 CHANNEL |
| • VOICE COMMUNICATION | 2 | TRANSMIT<br>1 CHANNEL<br>RECEIVE<br>1 CHANNEL |
| • IN-VEHICLE VIDEO COMMUNICATION (VIDEO TELEPHONE) | 3 | TRANSMIT<br>1 CHANNEL<br>RECEIVE<br>1 CHANNEL |
| • INTERNET COMMUNICATION USING CAR-TO-CAR<br>  COMMUNICATION AND ROAD-TO-CAR COMMUNICATION | 4 | TRANSMIT<br>1 CHANNEL<br>RECEIVE<br>1 CHANNEL |

# FIG.17

European Patent
Office

**EUROPEAN SEARCH REPORT**

Application Number

EP 06 02 3461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/198632 A1 (BREED DAVID S [US] ET AL) 26 December 2002 (2002-12-26) fig. 5 and fig. 20 par. [0011] par. [0169] l. 5-7 par. [0359] l. 7-13 par. [0618]-[0621] par. [0618] l. 14-15 par. [0619] l. 2-7 and 10-16 par. [0620] l. 3-6 par. [0621] l. 12-23 ----- | 1-11 | INV. G01S17/93 G08G1/16 |
| X | US 2005/068225 A1 (INOUE HIROTO [JP] ET AL) 31 March 2005 (2005-03-31) fig. 3, 7 and 11 par. [0012]-[0015], [0036]-[0045], [0052], [0076] and [0097] ----- | 1-11 | |
| A | US 4 885 590 A (HASAN MOH D A [US]) 5 December 1989 (1989-12-05) c. 8, l. 17-19 ----- | 2,8 | TECHNICAL FIELDS SEARCHED (IPC) |
| A | EP 1 209 863 B1 (ALPINE ELECTRONICS INC [JP]) 28 September 2005 (2005-09-28) c. 4, l. 51 to c. 5, l. 8 ----- | 5,10 | G01S |
| A | US 5 999 880 A (OKADA TSUYOSHI [JP] ET AL) 7 December 1999 (1999-12-07) * the whole document * ----- -/-- | 1-11 | |

The present search report has been drawn up for all claims

| Place of search | Date of completion of the search | Examiner |
|---|---|---|
| Munich | 27 February 2007 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 785 744 A1

European Patent
Office

**EUROPEAN SEARCH REPORT**

Application Number

EP 06 02 3461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TSUGAWA: "issues and recent trends in vehicle safety communication systems" IATSS RESEARCH, [Online] vol. 29, no. 1, February 2005 (2005-02), pages 7-15, XP007901779 Retrieved from the Internet: URL:http://www.iatss.or.jp/english/research/29-1/pdf/29-1-02.pdf> [retrieved on 2007-02-22] * the whole document * ----- | 1-11 | |
| | | | TECHNICAL FIELDS SEARCHED (IPC) |

The present search report has been drawn up for all claims

| Place of search | Date of completion of the search | Examiner |
|---|---|---|
| Munich | 27 February 2007 | GONZALEZ MORENO, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

30

**ANNEX TO THE EUROPEAN SEARCH REPORT
ON EUROPEAN PATENT APPLICATION NO.**

EP 06 02 3461

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2007

| Patent document cited in search report | | Publication date | Patent family member(s) | | Publication date |
|---|---|---|---|---|---|
| US 2002198632 | A1 | 26-12-2002 | NONE | | |
| US 2005068225 | A1 | 31-03-2005 | JP | 2005098847 A | 14-04-2005 |
| US 4885590 | A | 05-12-1989 | CA | 2009601 A1 | 14-10-1990 |
| EP 1209863 | B1 | 28-09-2005 | DE | 60113632 T2 | 22-06-2006 |
| | | | EP | 1209863 A2 | 29-05-2002 |
| | | | JP | 2002159043 A | 31-05-2002 |
| US 5999880 | A | 07-12-1999 | JP | 3681241 B2 | 10-08-2005 |
| | | | JP | 10148665 A | 02-06-1998 |

EPO FORM P0459

For more details about this annex : see Official Journal of the European Patent Office, No. 12/82

## REFERENCES CITED IN THE DESCRIPTION

### Non-patent literature cited in the description

- *What is UWB (Ultra Wide Band)?,* 28 June 2005, http://www.kuroda.elec.keio.ac.jp/projects/TeamU-WB/chap terl.html
- Introduction of the Studies on Inter-Vehicle Communication in Overseas: Their History and Present Situation. **HAJIME SEKI.** Automobile Research. Japan Automobile Research Institute, Inc, January 2005, vol. 27, 21, 26
- Cognitive radio has started: Communicate over convenient broadcasting bands. *Nikkei Electronics,* 25 October 2004, 43